# FASCICULE DE BREVET EUROPEEN

(11) **EP 3 752 750 B1**
(45) Date de publication et mention de la délivrance du brevet: **27.12.2023**
(21) Numéro de dépôt: 19718790.9
(22) Date de dépôt: 22.03.2019
(51) Int. Cl.: F16D 51/22, F16D 65/22, F16D 121/24, F16D 125/40, F16D 125/52

(54) **ACTIONNEUR LINEAIRE DE FREIN A TAMBOUR**
LINEARAKTUATOR FÜR TROMMELBREMSE
LINEAR ACTUATOR FOR DRUM BRAKE

(30) Priorité: 23.03.2018 FR 1852562
(43) Date de publication de la demande: 23.12.2020
(73) Titulaire: Hitachi Astemo France, 93700 Drancy (FR)
(72) Inventeur: BOURLON, Philippe, 77230 Dammartin-En-Goele (FR); CUBIZOLLES, Cyril, 93700 Drancy (FR)
(74) Mandataire: Brevalex
(86) Numéro de dépôt international: PCT/FR2019/050656
(87) Numéro de publication internationale: WO 2019/180391

(56) Documents cités:
- FR-A1- 3 016 013

## Description

### DOMAINE TECHNIQUE

La présente invention se rapporte à un actionneur linéaire des garnitures de freinage d'un frein à tambour de véhicule automobile.

Elle concerne également un frein à tambour équipé d'un tel actionneur.

### ÉTAT DE LA TECHNIQUE ANTÉRIEURE

Les freins à tambour sont typiquement utilisés dans les véhicules automobiles afin de réaliser trois types de freinage :
- le freinage de service, qui consiste à ralentir et/ou immobiliser le véhicule, typiquement par l'intermédiaire d'une pédale de freinage ;
- le freinage de stationnement, qui permet d'immobiliser le véhicule à l'arrêt, typiquement par l'intermédiaire d'un frein à main ;
- le freinage de secours, qui consiste à ralentir et/ou immobiliser le véhicule en cas de défaillance du freinage de service, et qui est typiquement assuré par le même dispositif que le freinage de stationnement.

Dans la plupart des véhicules équipés de freins à tambour, il est connu que ces trois types de freinage sont réalisés par le même frein à tambour. Spécifiquement et typiquement, la fonction de freinage de stationnement est assurée par un câble reliant une commande de frein à main situé dans l'habitacle, avec un levier pivotant dans le tambour autour d'une extrémité mobile d'un premier segment de freinage et écartant un second segment de freinage via une biellette de réaction.

Un frein à tambour comprend typiquement un tambour, coaxial avec la roue, et consistant en un cylindre creux solidaire de la pièce à freiner. Des segments de freinage équipés de garnitures de freinage peuvent venir frotter sur la surface intérieure du tambour. Pour un freinage, tandis que des premières extrémités des segments s'appuient tangentiellement à la rotation sur une plaque de butée solidaire d'un plateau immobilisé en rotation, des secondes extrémités des segments sont écartées l'une de l'autre pour appliquer les garnitures contre la face intérieure du tambour.

Le frein à tambour comporte un actionneur linéaire porté par le plateau qui est destiné à provoquer l'écartement l'une de l'autre des premières extrémités des segments.

L'actionneur linéaire comporte un boitier recevant un élément fileté rotatif et un élément fileté d'actionnement linéaire, qui coopèrent l'un avec l'autre pour provoquer le déplacement linéaire de l'élément fileté d'actionnement linéaire.

Le boitier porte aussi une roue intermédiaire qui transmet le mouvement provenant d'une motorisation électrique, à l'élément fileté rotatif.

Selon un mode de réalisation connu, le montage de la roue intermédiaire s'effectue par l'intermédiaire de deux flasques disposés de part et d'autre de la roue intermédiaire qui sont rapportés sur le boitier.

L'assemblage de ces flasques sur le boitier implique un grand nombre de composants de l'actionneur linéaire, ainsi qu'un certain temps d'assemblage des différentes pièces.

Le document FR3016013A1 montre un actionneur linéaire de frein à tambour.

Un but de la présente invention est de proposer un actionneur linéaire dont la structure est simplifiée.

### EXPOSÉ DE L'INVENTION

L'invention propose un actionneur linéaire de frein à tambour de véhicule d'après la revendication 1.

De préférence, le boitier comporte un corps creux de forme globalement cylindrique délimité par une paroi et qui est coaxial à l'axe principal A et dans lequel l'élément fileté rotatif et l'élément fileté d'actionnement sont mobiles selon l'axe principal A et le boitier comporte un manchon creux s'étendant perpendiculairement à l'axe principal A à partir de la paroi du corps creux, dans lequel la roue intermédiaire est montée à rotation autour de l'axe secondaire.

De préférence, l'élément fileté d'actionnement linéaire fait saillie axialement par rapport à une première extrémité axiale du corps creux et ladite première extrémité axiale du corps creux porte un élément de guidage réalisant le guidage de l'élément fileté d'actionnement linéaire en coulissement le long de l'axe principal A.

De préférence, l'actionneur linéaire comporte un élément coulissant d'actionnement linéaire qui est monté mobile en coulissement le long dudit axe principal A par rapport à une deuxième extrémité axiale du corps creux, qui est solidaire en coulissement avec l'élément fileté rotatif.

De préférence, ladite deuxième extrémité axiale du corps creux porte un élément de guidage réalisant le guidage de l'élément coulissant d'actionnement linéaire en coulissement le long de l'axe principal A.

De préférence, chaque élément de guidage est fixé à l'extrémité axiale du corps creux qui lui est associée par sertissage.

De préférence, l'actionneur linéaire comporte une couronne dentée montée mobile en rotation dans le boitier, ladite couronne dentée comportant une denture extérieure coopérant avec la roue intermédiaire, dans laquelle dite couronne dentée, l'élément fileté rotatif est monté coulissant le long de l'axe principal A et qui est solidaire en rotation avec l'élément fileté rotatif autour de l'axe principal A.

De préférence, la paroi périphérique externe du manchon est filetée et reçoit un écrou fileté complémentaire.

De préférence, l'écrou fileté est un écrou à encoches.

De préférence, le manchon comporte une face d'extrémité libre qui porte un axe de guidage d'une roue dentée plate qui est engrenée avec la roue intermédiaire, ledit axe de guidage étant orienté parallèlement à un axe radial du manchon.

L'invention propose aussi un frein à tambour de véhicule, notamment de véhicule automobile comportant un plateau fixe, deux segments montés mobiles sur le plateau pour pouvoir s'écarter l'un de l'autre pour venir en appui sur une piste de frottement portée par l'intérieur d'un tambour mobile en rotation par rapport audit plateau, caractérisé en ce qu'il comporte un actionneur linéaire selon l'invention, qui est fixé au plateau et qui est agencé pour écarter l'une de l'autre de deux premières extrémités a desdits segments qui sont en vis-à-vis l'une de l'autre.

De préférence, plateau comporte une ouverture qui est traversée par le manchon, une première face contre laquelle une face d'appui du corps creux est en appui et une deuxième face opposée à la première face, contre laquelle l'écrou fileté est en appui de manière telle que le plateau est serré entre l'écrou fileté et le corps creux.

De préférence, l'ouverture du plateau est de forme complémentaire de la forme de la paroi externe du manchon et cette dite forme est non circulaire.

### BRÈVE DESCRIPTION DES DESSINS

D'autres caractéristiques et avantages de l'invention apparaîtront à la lecture de la description détaillée qui suit, pour la compréhension de laquelle on se reportera aux figures annexées parmi lesquelles :
- la figure 1 est une représentation schématique d'un frein à tambour comportant un actionneur linéaire selon l'invention ;
- la figure 2 est une vue en perspective éclatée de l'actionneur linéaire représenté à la figure 1 ;
- la figure 3 est une vue en perspective de l'actionneur linéaire assemblé représenté aux figures 1 et 2 ;
- la figure 4 est un détail du frein à tambour représenté à la figure 1, montrant le montage de l'actionneur linéaire sur le plateau ;
- la figure 5 est une vue du frein à tambour représenté à la figure 1, selon l'autre face, montrant le serrage du plateau par l'écrou fileté ;
- la figure 6 est une vue similaire à celle de la figure 5, dans laquelle une platine de support d'une motorisation électrique est assemblée sur le plateau.

### EXPOSÉ DÉTAILLÉ DE MODES DE RÉALISATION PARTICULIERS

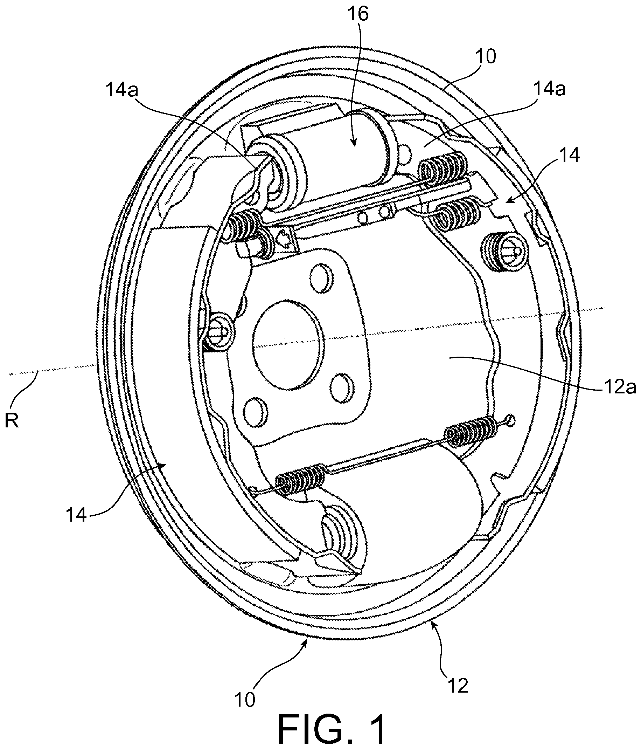

On a représenté à la figure 1 une partie d'un frein à tambour 10 de véhicule automobile. Ce frein à tambour 10 comporte un plateau 12 fixé en rotation par rapport au châssis du véhicule (non représenté) et un tambour périphérique (non représenté) qui est monté autour du plateau et qui est mobile en rotation par rapport au plateau 12 et par rapport au châssis autour d'un axe R de rotation.

Le plateau 12 est un composant globalement plan et de révolution autour de l'axe R de rotation. Il porte, sur une première face 12a, qui fait face au tambour, les moyens lui permettant de coopérer avec le tambour.

Le plateau porte ainsi des segments 14 montés mobiles sur le plateau 12 parallèlement au plan principal du plateau 12 de sorte qu'ils sont aptes à s'écarter l'un de l'autre pour venir en appui contre une piste de frottement portée par le tambour.

Le plateau 12 porte aussi un actionneur linéaire 16 qui coopère avec des premières extrémités 14a des segments 14 qui sont en vis-à-vis l'une de l'autre.

L'actionneur linéaire 16 comporte un élément fileté d'actionnement linéaire 18 et un élément coulissant d'actionnement linéaire 20 qui sont mobiles selon un axe principal A de l'actionneur linéaire 16 et sont aptes à s'écarter l'un de l'autre pour écarter les segments 14 l'un de l'autre et ainsi générer le frottement des segments 14 sur la piste de frottement du tambour.

L'actionneur linéaire 16 comporte aussi un élément fileté rotatif 22 qui est monté mobile en rotation autour de l'axe principal A de l'actionneur linéaire 16 et qui comporte un filetage (non représenté) qui est accouplé avec un filetage complémentaire (non représenté) de l'élément fileté d'actionnement linéaire 18 pour qu'une rotation de l'élément fileté rotatif 22 produise un coulissement de l'élément fileté d'actionnement linéaire 18 le long de l'axe principal A.

L'élément fileté rotatif 22 est aussi mobile en coulissement le long de l'axe principal A en sens opposé au sens de coulissement de l'élément fileté d'actionnement linéaire 18 le long de l'axe principal A, et l'élément fileté rotatif 22 est solidaire de l'élément coulissant d'actionnement linéaire 20 en coulissement le long de l'axe principal A.

Ainsi, lors d'une rotation de l'élément fileté rotatif 22 dans un premier sens, l'élément fileté d'actionnement linéaire 18 est entraîné en coulissement vers l'extérieur, ce qui provoque un appui du segment 14 qui lui est associé contre la piste de frottement du tambour. En réaction à ce coulissement, l'élément fileté rotatif est entraîné en coulissement en sens opposé le long de l'axe principal A, entrainant par conséquent l'élément coulissant d'actionnement linéaire 20 en coulissement vers l'extérieur, provoquant l'appui de l'autre segment 14 contre la piste de frottement du tambour.

La rotation de l'élément fileté rotatif 22 dans l'autre sens provoque le coulissement vers l'intérieur de l'élément fileté d'actionnement linéaire 18 et, par réaction, de l'élément coulissant d'actionnement linéaire 20.

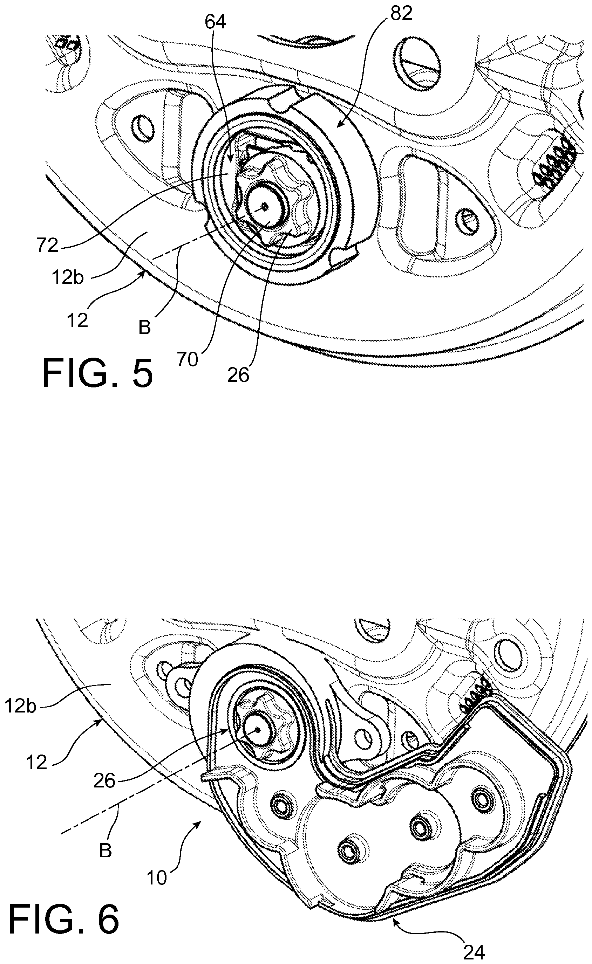

L'élément fileté rotatif 22 est entraîné en rotation autour de l'axe principal A par une motorisation électrique qui est montée sur la deuxième face 12b du plateau 12, par une platine de support 24 représentée à la figure 5, c'est-à-dire sur la face 12b qui est opposée à celle qui porte l'actionneur linéaire 16. La motorisation comporte un arbre de sortie perpendiculaire au plan du plateau 12.

L'actionneur linéaire 16 comporte une roue dentée plate 26 qui est accouplée à l'arbre de sortie de la motorisation et qui est mobile en rotation autour d'un axe B perpendiculaire au plan du plateau 12. La roue dentée plate 26 comporte une denture annulaire 28 et elle est accouplée avec une roue dentée intermédiaire 30 de l'actionneur linéaire 16.

La roue dentée intermédiaire 30 est mobile en rotation autour d'un axe secondaire C qui est parallèle à l'axe principal A et qui est situé de l'autre côté du plan principal du plateau 12 par rapport à l'axe principal A.

L'actionneur linéaire 16 comporte une couronne dentée 32 qui est mobile en rotation autour de l'axe principal A et qui comporte une denture extérieure 34 qui est accouplée avec la denture de la roue dentée intermédiaire 30.

La couronne dentée 32 comporte une face annulaire interne 36 qui est cylindrique coaxiale à l'axe principal A et dont la section transversale, c'est-à-dire perpendiculairement à l'axe principal A, est non circulaire. Par exemple la section de la face annulaire interne 36 est polygonale.

L'élément fileté rotatif 22 comporte une paroi périphérique externe 38 dont la forme est complémentaire de la forme de la face annulaire interne 36 de la couronne dentée 32. Par conséquent, la paroi périphérique externe 38 de l'élément fileté rotatif 22 est cylindrique coaxiale à l'axe principal A et sa section transversale, c'est-à-dire perpendiculairement à l'axe principal A, est non circulaire. Selon l'exemple de la face annulaire interne 36 défini ci-dessus, la section de la paroi périphérique externe 38 est polygonale.

L'élément fileté rotatif 22 est par conséquent solidaire de la couronne dentée 32 en rotation autour de l'axe principal A. Par contre, l'élément fileté rotatif 22 est monté mobile en coulissement le long de l'axe principal A par rapport à la couronne dentée 32.

Il en résulte que la couronne dentée 32 réalise un guidage en coulissement de l'élément fileté rotatif 22 le long de l'axe principal A.

Ainsi, le mouvement d'entrainement provenant de la motorisation est transmis à la roue dentée plate 26 puis la roue dentée intermédiaire 30, puis la couronne dentée 32 et l'élément fileté rotatif 22. Ce mouvement d'entrainement consiste en une rotation qui est transformé en un mouvement de coulissement de l'élément fileté d'actionnement linéaire 18 et de l'élément fileté rotatif 22 par une coopération de ces deux éléments.

L'actionneur linéaire 16 comporte aussi un boitier 40 qui renferme l'élément fileté rotatif 22, la couronne dentée 32 la roue intermédiaire 30.

Ce boitier 40 renferme aussi, mais partiellement seulement, l'élément fileté d'actionnement linéaire 18 et l'élément coulissant d'actionnement linéaire 20, c'est-à-dire que chacun de ces deux éléments 18, 20 comporte une partie qui s'étend à l'extérieur du boitier 40, pour coopérer avec le segment 14 qui lui est associé.

Le boitier 40 est en outre réalisé pour permettre la solidarisation de l'actionneur linéaire 16 avec le plateau 12.

Le boitier 40 comporte un corps creux 42 qui est de forme principale cylindrique et qui est coaxial à l'axe principal A. Ce corps creux reçoit l'élément fileté rotatif 22, la couronne dentée 32, l'élément fileté d'actionnement linéaire 18 et l'élément coulissant d'actionnement linéaire 20.

Le corps creux 42 comporte deux parois cylindriques internes 44 dont chacune est une paroi cylindrique de révolution coaxiale à l'axe principal A, qui sont décalées axialement l'une par rapport à l'autre.

Chaque paroi cylindrique interne 44 coopère avec une portion annulaire d'extrémité 46 de la couronne dentée 32, pour réaliser le guidage en rotation de la couronne dentée 32 dans le corps creux 42.

La couronne dentée 32 et l'élément fileté d'actionnement linéaire 18 sont reçus entièrement dans le corps creux 42 et sont aptes à se déplacer dans le corps creux selon l'axe principal A.

L'élément fileté d'actionnement linéaire 18 est reçu en partie dans le corps creux 42, au niveau d'une première extrémité axiale 42a du corps creux 42 et une portion 48 de l'élément fileté d'actionnement linéaire 18 fait saillie vers l'extérieur du boitier par rapport à la première extrémité axiale 42a du corps creux 42.

Cette portion 48 de l'élément fileté d'actionnement linéaire 18 agit sur le segment 14 associé à l'élément fileté d'actionnement linéaire 18.

De même, l'élément coulissant d'actionnement linéaire 20 est reçu en partie dans le corps creux 42, au niveau d'une deuxième extrémité axiale 42b du corps creux 42 et une portion 52 de l'élément coulissant d'actionnement linéaire 20 fait saillie vers l'extérieur du boitier par rapport à la deuxième extrémité axiale 42b du corps creux 42.

Cette portion 52 de l'élément coulissant d'actionnement linéaire 20 agit sur le segment 14 associé à l'élément coulissant d'actionnement linéaire 20.

Le boitier 40 comporte aussi deux éléments de guidage 54 dont chacun est monté à une extrémité axiale 42a, 42b du corps creux 42, et réalise le guidage en translation de l'élément fileté d'actionnement linéaire 18 ou de l'élément coulissant d'actionnement linéaire 20.

Les éléments de guidage 54 sont des éléments rapportés sur le corps creux 42. De préférence, les éléments de guidage 54 sont réalisés par frittage et ils sont sertis dans l'extrémité axiale 42a, 42b associée du corps creux 42.

Chaque élément de guidage 54 consiste en un élément de révolution coaxial à l'axe principal A et il comporte une portion annulaire d'extrémité 56 par laquelle l'élément de guidage est emboîté dans l'extrémité axiale 42a, 42b associée du corps creux 42.

Selon un mode de réalisation préféré, la portion annulaire d'extrémité 56 comporte une face périphérique 58 qui coopère avec la paroi cylindrique interne 44 du corps creux 42 pour le maintien en position de l'élément de guidage 54.

Chaque élément de guidage 54 comporte en outre une portion annulaire 60 qui délimite un orifice circulaire dans lequel l'élément fileté d'actionnement linéaire 18 ou l'élément coulissant d'actionnement linéaire 20 est reçu sans jeu et avec possibilité de coulissement axial.

C'est par cette portion annulaire 60 que l'élément de guidage 54 réalise le guidage en translation de l'élément fileté d'actionnement linéaire 18 ou de l'élément coulissant d'actionnement linéaire 20.

Le boitier 40 porte aussi deux éléments d'étanchéité 62 dont chacun consiste en un élément de révolution souple qui est solidarisé à une partie de l'élément fileté d'actionnement linéaire 18 ou de l'élément coulissant d'actionnement linéaire 20 qui fait saillie par rapport au corps creux 42 d'une part, et à l'élément de guidage 54 d'autre part, pour protéger la liaison coulissante entre chaque élément de guidage 54 et l'élément fileté d'actionnement linéaire 18 ou l'élément coulissant d'actionnement linéaire 20, contre l'intrusion d'éléments tels que des poussières.

Le boitier 40 comporte un manchon 64 qui est réalisé d'une seule pièce avec le corps creux 42 et qui s'étend selon une direction perpendiculaire à l'axe principal A.

Le manchon 64 est un élément tubulaire dont le volume intérieur 66 communique avec le volume intérieur du corps creux 42.

La roue dentée intermédiaire 30 est disposée dans le volume intérieur 66 du manchon 64, une goupille 68 coaxiale à l'axe secondaire C est fixée au manchon 64, en travers de son volume intérieur 66, pour réaliser le guidage en rotation de la roue dentée intermédiaire 30.

La roue dentée plate 26 est portée par l'extrémité libre du manchon 64. Plus précisément, une tige de guidage 70 coaxiale à l'axe B de rotation de la roue dentée plate 26 est fixée à la face transversale 72 d'extrémité libre du manchon 64.

Lorsque la roue dentée plate 26 est en position, elle s'étend en partie en regard du volume intérieur 66 du manchon 64 pour pouvoir s'engager avec la roue dentée intermédiaire 30.

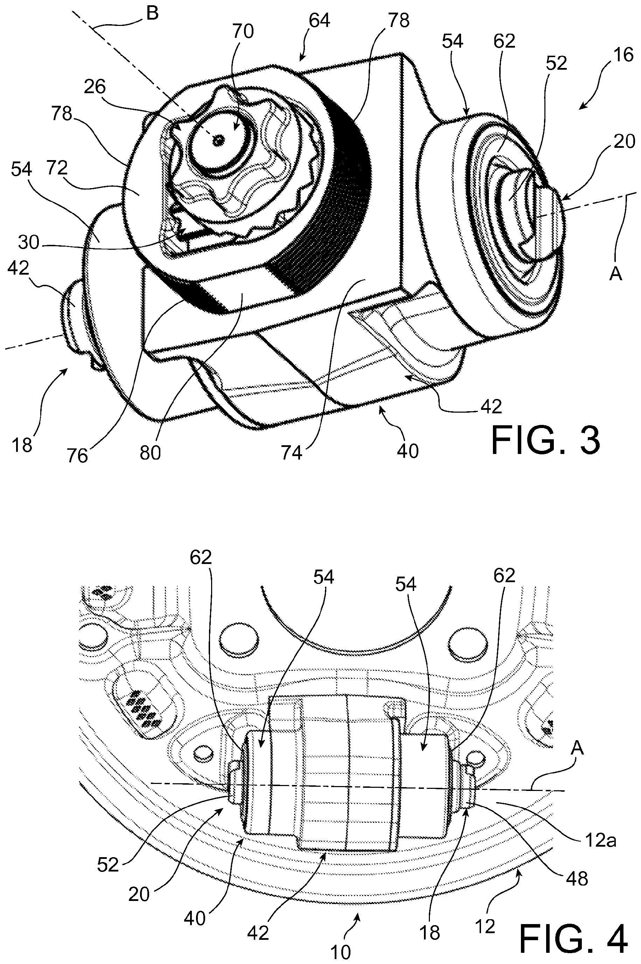

Comme on peut le voir aux figures 4 à 6 lorsque l'actionneur linéaire 16 est monté sur le plateau 12, le corps creux 42, ainsi que tous les composants agencés dans celui-ci, est fixé sur la première face 12a du plateau 12. Le manchon 64 traverse une ouverture formée dans le plateau de telle sorte que la majeure partie du manchon 64, qui porte la roue dentée plate 26 et la roue dentée intermédiaire 30, fait saillie par rapport à la deuxième face 12b du plateau 12.

La paroi externe du corps creux 42 comporte une face d'appui 74 qui est en vis-à-vis et qui est en contact avec la première face 12a du plateau 12.

La paroi externe 76 du manchon 64 est de forme principale cylindrique coaxiale à l'axe principal du manchon 64. La section de cette paroi externe 76 selon un plan perpendiculaire à l'axe principal du manchon 64 est de forme non circulaire.

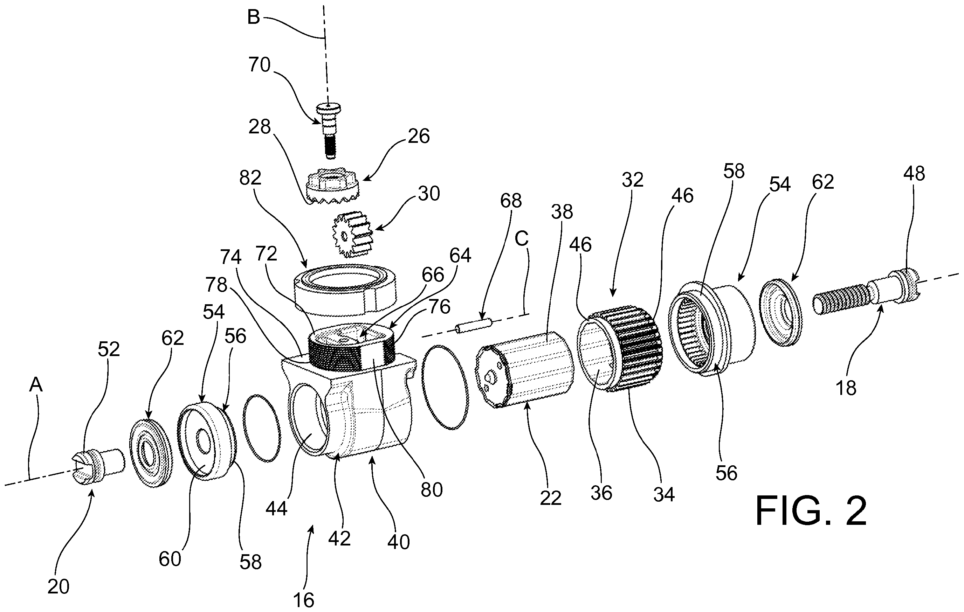

Ici, comme on peut le voir notamment à la figure 2, la section de la paroi externe 76 est de forme principale oblongue. La paroi externe 76 comporte deux portions en arc de cylindre 78 centrées sur l'axe principal du manchon 64 et deux méplats 80 reliant les extrémités des portions en arc de cylindre 78.

Aussi, la forme de l'ouverture du plateau 12, qui est traversée par le manchon 64, est complémentaire de la section de la paroi externe 76 du manchon 64.

Cela permet d'empêcher toute rotation de l'actionneur linéaire 16 autour de l'axe principal du manchon 64.

Les portions en arc de cylindre 78 de la paroi externe 76 du manchon 64 sont en outre filetées et elles coopèrent avec un écrou fileté 82 pour serrer le boitier 40 sur le plateau 12.

Selon un mode de réalisation préféré, l'écrou fileté 82 est un écrou à encoches et il est verrouillé en position de serrage du boitier 40 par des moyens conventionnels tels que par exemple une rondelle frein (non représentée).

Comme on peut le voir à la figure 5, la platine 24 de support de la motorisation électrique est montée sur la deuxième face 12b du plateau 12 en recouvrant le manchon 64 et l'écrou fileté 82. Un système d'étanchéité 84 est disposé entre la platine 24, le manchon 64 et l'écrou fileté 82.

### NOMENCLATURE

10 frein à tambour
12 plateau
12a première face
12b deuxième face
14 segment
14a première extrémité
16 actionneur linéaire
18 élément fileté d'actionnement linéaire
20 élément coulissant d'actionnement linéaire
22 élément fileté rotatif
24 platine de support
26 roue dentée plate
28 denture annulaire
30 roue dentée intermédiaire
32 couronne dentée
34 denture extérieure
36 face annulaire interne
38 paroi périphérique externe
40 boitier
42 corps creux
42a première extrémité axiale
42b deuxième extrémité axiale
44 paroi cylindrique interne
46 portion annulaire d'extrémité
48 portion
52 portion
54 élément de guidage
56 portion annulaire d'extrémité
58 face périphérique
60 portion annulaire
62 éléments d'étanchéité
64 manchon
66 volume intérieur
68 goupille
70 tige de guidage
72 face transversale
74 face d'appui
76 paroi externe
78 portions en arc de cylindre
80 méplats
82 écrou fileté
84 système d'étanchéité

## Revendications

1. Actionneur linéaire (16) de frein à tambour (10) de véhicule, notamment de véhicule automobile incluant :
un élément fileté rotatif (22) qui est mobile en rotation autour d'un axe principal (A) de l'actionneur linéaire (16),
un élément fileté d'actionnement linéaire (18) qui coopère avec l'élément fileté rotatif (22) et qui est mobile en coulissement le long dudit axe principal (A),
une roue intermédiaire (30) qui est mobile en rotation autour d'un axe secondaire parallèle audit axe principal (A) et qui est accouplée avec l'élément fileté rotatif (22),
un boitier (40) renfermant l'élément fileté rotatif (22), l'élément fileté d'actionnement linéaire (18) et la roue intermédiaire (30),
dans lequel le boitier (40) est réalisé en une seule pièce
dans lequel le boitier (40) comporte
un corps creux (42) de forme globalement cylindrique délimité par une paroi (44) et qui est coaxial à l'axe principal (A) et dans lequel l'élément fileté rotatif (22) et l'élément fileté d'actionnement sont mobiles selon l'axe principal (A) et
comporte un manchon (64) creux s'étendant perpendiculairement à l'axe principal (A) à partir de la paroi du corps creux (42), dans lequel la roue intermédiaire (30) est montée à rotation autour de l'axe secondaire,
**caractérisé en ce que** le manchon porte une goupille (68) de guidage en rotation de la roue intermédiaire (30).

2. Actionneur linéaire (16) selon la revendication précédente, **caractérisé en ce que** l'élément fileté d'actionnement linéaire (18) fait saillie axialement par rapport à une première extrémité axiale (42a) du corps creux (42) et ladite première extrémité axiale (42a) du corps creux (42) porte un élément de guidage (54) réalisant le guidage de l'élément fileté d'actionnement linéaire (18) en coulissement le long de l'axe principal (A).

3. Actionneur linéaire (16) selon la revendication précédente, **caractérisé en ce qu'**il comporte un élément coulissant d'actionnement linéaire (20) qui est monté mobile en coulissement le long dudit axe principal (A) par rapport à une deuxième extrémité axiale (42b) du corps creux (42), qui est solidaire en coulissement avec l'élément fileté rotatif (22).

4. Actionneur linéaire (16) selon la revendication précédente, **caractérisé en ce que** ladite deuxième extrémité axiale (42b) du corps creux (42) porte un élément de guidage (54) réalisant le guidage de l'élément coulissant d'actionnement linéaire (20) en coulissement le long de l'axe principal (A).

5. Actionneur linéaire (16) selon la revendication précédente, **caractérisé en ce que** chaque élément de guidage (54) est fixé à l'extrémité axiale du corps creux (42) qui lui est associée par sertissage.

6. Actionneur linéaire (16) selon l'une quelconque des revendications précédentes, **caractérisé en ce que** l'actionneur linéaire (16) comporte une couronne dentée (32) montée mobile en rotation dans le boitier (40), ladite couronne dentée (32) comportant une denture extérieure (34) coopérant avec la roue intermédiaire (30), dans laquelle dite couronne dentée (32), l'élément fileté rotatif (22) est monté coulissant le long de l'axe principal (A) et qui est solidaire en rotation avec l'élément fileté rotatif (22) autour de l'axe principal (A).

7. Actionneur linéaire (16) selon l'une quelconque des revendications précédentes, **caractérisé en ce que** la paroi périphérique externe (76) du manchon (64) est filetée et reçoit un écrou fileté (82) complémentaire.

8. Actionneur linéaire (16) selon la revendication précédente, **caractérisé en ce que** l'écrou fileté (82) est un écrou à encoches.

9. Actionneur linéaire (16) selon l'une quelconque des revendications précédentes, **caractérisé en ce que** le manchon (64) comporte une face d'extrémité libre (72) qui porte un axe (70) de guidage d'une roue dentée plate (26) qui est engrenée avec la roue intermédiaire (30), ledit axe de guidage (70) étant orienté parallèlement à un axe radial du manchon (64).

10. Frein à tambour (10) de véhicule, notamment de véhicule automobile comportant un plateau fixe (12), deux segments (14) montés mobiles sur le plateau (12) pour pouvoir s'écarter l'un de l'autre pour venir en appui sur une piste de frottement portée par l'intérieur d'un tambour mobile en rotation par rapport audit plateau (12), **caractérisé en ce qu'**il comporte un actionneur linéaire (16) selon l'une quelconque des revendications précédentes, qui est fixé au plateau (12) et qui est agencé pour écarter l'une de l'autre de deux premières extrémités (14a) desdits segments (14) qui sont en vis-à-vis l'une de l'autre.

11. Frein à tambour (10) selon la revendication précédente, **caractérisé en ce que** plateau (12) comporte une ouverture qui est traversée par le manchon (64), une première face (12a) contre laquelle une face d'appui (74) du corps creux (42) est en appui et une deuxième face (12b) opposée à la première face (12a), contre laquelle l'écrou fileté (82) est en appui de manière telle que le plateau (12) est serré entre l'écrou fileté (82) et le corps creux (42).

12. Frein à tambour (10) selon la revendication précédente, **caractérisé en ce que** l'ouverture du plateau est de forme complémentaire de la forme de la paroi externe (76) du manchon (64) et cette dite forme est non circulaire.

## Patentansprüche

1. Linearantrieb (16) für eine Trommelbremse (10) eines Fahrzeugs, insbesondere eines Kraftfahrzeugs, umfassend:
ein rotierendes Gewindeelement (22), das um eine Hauptachse (A) des Linearantriebs (16) rotierend beweglich ist,
ein lineares Betätigungsgewindeelement (18), das mit dem rotierenden Gewindeelement (22) zusammenwirkt und entlang der Hauptachse (A) gleitend beweglich ist,
ein Zwischenrad (30), das um eine Nebenachse parallel zur Hauptachse (A) rotierend beweglich ist und mit dem rotierenden Gewindeelement (22) gekoppelt ist,
ein Gehäuse (40), das das rotierende Gewindeelement (22), das lineare Betätigungsgewindeelement (18) und das Zwischenrad (30) umschließt,
wobei das Gehäuse (40) einstückig hergestellt ist,
wobei das Gehäuse (40)
einen Hohlkörper (42) mit einer allgemein zylindrischen Form umfasst, der durch eine Wand (44) begrenzt ist und der koaxial zur Hauptachse (A) ist und in dem das rotierende Gewindeelement (22) und das Betätigungsgewindeelement entlang der Hauptachse (A) beweglich sind und
eine hohle Hülse (64) umfasst, die sich senkrecht zur Hauptachse (A) von der Wand des Hohlkörpers (42) aus erstreckt und in der das Zwischenrad (30) drehbar um die Nebenachse montiert ist,
**dadurch gekennzeichnet, dass** die Hülse einen Führungsstift (68) für die Rotation des Zwischenrads (30) trägt.

2. Linearantrieb (16) nach dem vorhergehenden Anspruch, **dadurch gekennzeichnet, dass** das lineare Betätigungsgewindeelement (18) in Bezug auf ein erstes axiales Ende (42a) des Hohlkörpers (42) axial vorsteht und das erste axiale Ende (42a) des Hohlkörpers (42) ein Führungselement (54) trägt, das die Gleitführung des linearen Betätigungsgewindeelements (18) entlang der Hauptachse (A) ausführt.

3. Linearantrieb (16) nach dem vorhergehenden Anspruch, **dadurch gekennzeichnet, dass** er ein lineares Betätigungsgleitelement (20) umfasst, das gleitend beweglich entlang der Hauptachse (A) in Bezug auf ein zweites axiales Ende (42b) des Hohlkörpers (42) montiert ist, der mit dem rotierenden Gewindeelement (22) gleitend verbunden ist.

4. Linearantrieb (16) nach dem vorhergehenden Anspruch, **dadurch gekennzeichnet, dass** das zweite axiale Ende (42b) des Hohlkörpers (42) ein Führungselement (54) trägt, das die Gleitführung des linearen Betätigungsgleitelements (20) entlang der Hauptachse (A) ausführt.

5. Linearantrieb (16) nach dem vorhergehenden Anspruch, **dadurch gekennzeichnet, dass** jedes Führungselement (54) an dem ihm zugeordneten axialen Ende des Hohlkörpers (42) durch Crimpen befestigt ist.

6. Linearantrieb (16) nach einem der vorhergehenden Ansprüche, **dadurch gekennzeichnet, dass** der Linearantrieb (16) einen Zahnkranz (32) umfasst, der im Gehäuse (40) drehbeweglich montiert ist, wobei der Zahnkranz (32) eine Außenverzahnung (34) umfasst, die mit dem Zwischenrad (30) zusammenwirkt, wobei das rotierende Gewindeelement (22) entlang der Hauptachse (A) gleitend im Zahnkranz (32) montiert ist, der mit dem rotierenden Gewindeelement (22) um die Hauptachse (A) rotierend verbunden ist.

7. Linearantrieb (16) nach einem der vorhergehenden Ansprüche, **dadurch gekennzeichnet, dass** die äußere Umfangswand (76) der Hülse (64) mit einem Gewinde versehen ist und eine komplementäre Gewindemutter (82) aufnimmt.

8. Linearantrieb (16) nach dem vorhergehenden Anspruch, **dadurch gekennzeichnet, dass** die Gewindemutter (82) eine Nutmutter ist.

9. Linearantrieb (16) nach einem der vorhergehenden Ansprüche, **dadurch gekennzeichnet, dass** die Hülse (64) eine freie Endfläche (72) umfasst, die eine Führungsachse (70) für ein flaches Zahnrad (26) trägt, mit dem Zwischenrad (30) kämmt, wobei die Führungsachse (70) parallel zu einer Radialachse der Hülse (64) ausgerichtet ist.

10. Trommelbremse (10) für ein Fahrzeug, insbesondere ein Kraftfahrzeug, umfassend eine feststehende Platte (12) und zwei Segmente (14), die beweglich an der Platte (12) montiert sind, um sich voneinander entfernen zu können, um auf einer Reibungsoberfläche zum Anliegen zu kommen, die von der Innenseite einer Trommel getragen wird, die in Bezug auf die Platte (12) drehbeweglich ist, **dadurch gekennzeichnet, dass** sie einen Linearantrieb (16) nach einem der vorhergehenden Ansprüche umfasst, der an der Platte (12) befestigt und so angeordnet ist, dass er zwei erste Enden (14a) der Segmente (14), die einander gegenüberliegen, voneinander beabstandet.

11. Trommelbremse (10) nach dem vorhergehenden Anspruch, **dadurch gekennzeichnet, dass** die Platte (12) eine Öffnung, die von der Hülse (64) durchquert wird, wobei eine erste Fläche (12a) an der Anlagefläche (74) des Hohlkörpers (42) anliegt und eine der ersten Fläche (12a) gegenüberliegende zweite Fläche (12b) umfasst, an der die Gewindemutter (82) derart anliegt, dass die Platte (12) zwischen der Gewindemutter (82) und dem Hohlkörper (42) eingeklemmt ist.

12. Trommelbremse (10) nach dem vorhergehenden Anspruch, **dadurch gekennzeichnet, dass** die Öffnung der Platte eine zur Form der Außenwand (76) der Hülse (64) komplementäre Form aufweist und diese Form nicht kreisförmig ist.

## Claims

1. Linear actuator (16) for a drum brake (10) of a vehicle, in particular a motor vehicle including:
a rotary threaded element (22) that is able to rotate about a main axis (A) of the linear actuator (16),
a threaded linear actuation element (18) that cooperates with the rotary threaded element (22) and that is able to slide along said main axis (A),
an intermediate wheel (30) that is able to rotate about a secondary axis parallel to said main axis (A) and that is coupled with the rotary threaded element (22),
a housing (40) enclosing the rotary threaded element (22), the threaded linear actuation element (18) and the intermediate wheel (30),
wherein the housing (40) is made from a single part
**characterised in that** the housing (40) includes
a hollow body (42) of globally cylindrical shape delimited by a wall (44) and that is coaxial with the main axis (A) and wherein the rotary threaded element (22) and the threaded actuation element are mobile along the main axis (A) and
includes a hollow sleeve (64) extending perpendicularly to the main axis (A) from the wall of the hollow body (42), wherein the intermediate wheel (30) is rotatably mounted about the secondary axis,
**characterized in that** the sleeve holds a pin (68) carrying out the guiding in rotation of the intermediate gear wheel (30).

2. Linear actuator (16) according to the preceding claim, **characterised in that** the threaded linear actuation element (18) protrudes axially with respect to a first axial end (42a) of the hollow body (42) and said first axial end (42a) of the hollow body (42) bears a guiding element (54) carrying out the guiding of the threaded linear actuation element (18) by sliding along the main axis (A).

3. Linear actuator (16) according to the preceding claim, **characterised in that** it includes a sliding linear actuation element (20) that is mounted able to slide along said main axis (A) with respect to a second axial end (42b) of the hollow body (42), that is integral in sliding with the rotary threaded element (22).

4. Linear actuator (16) according to the preceding claim, **characterised in that** said second axial end (42b) of the hollow body (42) bears a guiding element (54) carrying out the guiding of the sliding linear actuation element (20) by sliding along the main axis (A).

5. Linear actuator (16) according to the preceding claim, **characterised in that** each guiding element (54) is fastened to the axial end of the hollow body (42) that is associated with it by crimping.

6. Linear actuator (16) according to any preceding claim, **characterised in that** the linear actuator (16) includes a ring gear (32) mounted able to rotate in the housing (40), said ring gear (32) including an outer toothing (34) cooperating with the intermediate wheel (30), wherein said ring gear (32), the rotary threaded element (22) is mounted able to slide along the main axis (A) and that is integral in rotation with the rotary threaded element (22) about the main axis (A).

7. Linear actuator (16) according to any preceding claim, **characterised in that** the outer peripheral wall (76) of the sleeve (64) is threaded and receives a complementary threaded nut (82).

8. Linear actuator (16) according to the preceding claim, **characterised in that** the threaded nut (82) is a locknut.

9. Linear actuator (16) according to any preceding claim, **characterised in that** the sleeve (64) includes a free end face (72) that bears a pin (70) for guiding a flat gear wheel (26) that is engaged with the intermediate wheel (30), said guide pin (70) being oriented parallel to a radial axis of the sleeve (64).

10. Drum brake (10) of a vehicle, in particular a motor vehicle including a fixed plate (12), two segments (14) mounted able to move on the plate (12) to be able to move away from one another to bear on a friction surface borne by the inside of a drum that is able to rotate with respect to said plate (12), **characterised in that** it includes a linear actuator (16) according to any preceding claim, that is fastened to the plate (12) and that is arranged to separate from one another two first ends (14a) of said segments (14) that are facing one another.

11. Drum brake (10) according to the preceding claim, **characterised in that** the plate (12) includes an opening that is passed through by the sleeve (64), a first face (12a) against which a bearing face (74) of the hollow body (42) is bearing and a second face (12b) opposite the first face (12a), against which the threaded nut (82) is bearing in such a way that the plate (12) is clamped between the threaded nut (82) and the hollow body (42).

12. Drum brake (10) according to the preceding claim, **characterised in that** the opening of the plate is of complementary shape with the shape of the outer wall (76) of the sleeve (64) and this said shape is non-circular.
